# EUROPEAN PATENT SPECIFICATION

(11) **EP 1 674 780 B1**
(45) Date of publication and mention of the grant of the patent: **11.02.2009**
(21) Application number: 05257914.1
(22) Date of filing: 20.12.2005
(51) Int. Cl.: F16L 47/03, F16L 47/34, B29C 65/34

(54) **Tapping tee assembly**
Vorrichtung zum Anbohren einer Leitung
Appareil pour le piquage d'un conduit

(30) Priority: 23.12.2004 GB 0428162
(43) Date of publication of application: 28.06.2006
(73) Proprietor: Radius Systems Limited, Nr Alfreton Derbyshire DE55 5JD (GB)
(72) Inventor: Bowman, Jeremy, Chesterfield S40 3NA (GB); Christodoulou, Mario, Mansfield Nottinghamshire NG18 4HL (GB)
(74) Representative: Lunt, Mark George Francis

(56) References cited:
- DE-C1- 10 202 676
- DE-U1- 9 308 621
- GB-A- 1 294 200
- US-A- 5 348 045
- US-A- 5 601 315
- PATENT ABSTRACTS OF JAPAN vol. 1999, no. 10, 31 August 1999 (1999-08-31) & JP 11 141786 A (MITSUBISHI PLASTICS IND LTD), 28 May 1999 (1999-05-28)
- PATENT ABSTRACTS OF JAPAN vol. 1998, no. 02, 30 January 1998 (1998-01-30) & JP 09 273692 A (ARON KASEI CO LTD; TOKUSHU KOGYO KK; II F TECHNO:KK), 21 October 1997 (1997-10-21)
- PATENT ABSTRACTS OF JAPAN vol. 018, no. 023 (M-1541), 14 January 1994 (1994-01-14) & JP 05 256391 A (TOKYO GAS CO LTD), 5 October 1993 (1993-10-05)

## Description

This invention relates to tapping tee assemblies, and more particularly to a tapping tee assembly adapted to be mounted on a plastics pipeline by electrofusion to facilitate the connection of a branch pipe thereto.

### BACKGROUND

A tapping tee is a fitting that can be mounted on a pipeline thereby enabling a cutter to travel through the body of the fitting in order to cut a hole in the pipeline. Typically the tapping tee is provided with a body having a through bore and spigot means for connecting a branch pipe thereto so that fluid can pass from the pipeline to the branch pipe when the cutter is withdrawn. It is known to connect the tapping tee to the outer surface of the plastics pipeline by means of a plastics saddle, which can be integral or separate from the body of the tapping tee, and which is provided with a saddle-shaped electrofusion element. The electrofusion element can be embedded in a fusible polymer material, whereupon it is generally referred to as an electrofusion mat. Tapping tees provided with saddles and saddle-shaped electrofusion elements and mats are disclosed in US patents 4933037, 4806181 and 5104468, and in UK patent application GB2310264. The spigot and the branch pipe can also be joined by electrofusion, for example, by using a standard tubular electrofusion coupler. An electrofusion coupler typically comprises a tubular plastics body having an electrofusion element embedded therein.

It will be appreciated that the conventional tapping tee can consist of several separate parts: the body, the saddle, the cutter, the saddle-shaped electrofusion mat and the tubular electrofusion coupler. The possibility of one or more of these parts being lost on site, or dropped and damaged our contaminated by dust or earth is considerable. In addition, separate electrical connectors need to be provided for each of the electrofusion elements and each of the electrofusion elements needs to be independently energised.

US-A-5601315 discloses a saddle fitting provided with a single electrofusion element that both fuses the saddle to a pipeline and to a third component, such as a branch pipe or socket.

US-A-5348045 discloses a tapping tee assembly for a plastics pipeline comprising:
a saddle provided with a first saddle-shaped electrofusion element;
a hollow body integral with the saddle and provided with an axial bore;
a cutter disposed within the bore of the hollow body and adapted in use to traverse the bore, to contact the pipeline wall and to cut a hole therein;
a spigot integral with the body and in fluid connection with the axial bore of the body; and
the spigot being provided with a second tubular electrofusion element or being adapted to receive a tubular electrofusion element therein or thereon.

### BRIEF SUMMARY OF THE DISCLOSURE

The present invention provides an electrofusion tapping tee assembly wherein the separate parts are integrated and wherein a connection is made between the electrofusion elements such that, in preferred embodiments, the electrofusion elements can be energised simultaneously.

According to a first aspect of the present invention there is provided a tapping tee of the type defined above in relation to US-A-5348045, characterised in that separate circuit means is provided for electrically connecting the first and second electrofusion elements, which circuit means is integrated with the tapping tee assembly.

In one preferred embodiment of a tapping tee assembly in accordance with the invention, the cutter is formed from a metallic material and the circuit means for electrically connecting the electrofusion elements includes the cutter.

In a second preferred embodiment of a tapping tee assembly according to the invention, the circuit means for electrically connecting the electrofusion elements comprises a direct connection, such that the electrofusion elements are permanently connected together

In another preferred embodiment, the tapping tee assembly of the invention is provided with a first electrical connector mounted on the spigot and a second electrical connector mounted on the saddle or body, whereby a source of electrical power can be connected to both the first and second electrofusion elements.

Preferably the first and second electrofusion elements are balanced such that when the total circuit is energised the heat outputs per unit area per unit time from each of the first and second electrofusion elements are similar, and preferably substantially identical. Preferably the fusion times for the first and second fusion elements are similar and preferably substantially identical.

The saddle of the tapping tee assembly can be of any suitable shape, but is usually an annular disc or polygon (preferably a square or rectangle), curved to conform to the outer wall of the plastics pipeline. The first saddle-shaped electrofusion element, can, if desired, be embedded in a fusible polymeric material in the form of a saddle-shaped electrofusion mat. The mat can be mounted on the saddle by screws or other connecting means, or can clip into a recess moulded into the saddle. Alternatively the electrofusion mat can be mounted on the saddle by the use of a hot melt adhesive as described in our pending UK application 0501453.5. In yet another alternative, where the saddle comprises a fusible polymeric material, the first electrofusion element can be integrated with the saddle by over-moulding the saddle. In a still further embodiment, a wire for the first electrofusion element of the saddle can be embedded within the pre-moulded body of the saddle by "ploughing-in" the wire.

The first electrofusion element is preferably embedded in a fusible polymeric material. Suitable fusible polymeric materials include, for example, olefinically unsaturated polymeric materials such as polyethylene, polypropylene, polybutylene, and higher olefinic polymers; copolymers of ethylene, propylene and butylenes with each other and with other olefinically unsaturated monomers, olefinically unsaturated aromatic polymers, such as polystyrene and styrene copolymers; and polymers and copolymers of vinyl monomers such as ethylene vinyl acetate copolymers, and such like materials. Block copolymers and polymer blends of polymerised monomers of any of the abovementioned polymers are also included. A particularly suitable polymeric material is polyethylene, and this is the preferred polymeric material for use in the present invention.

The first electrofusion element is preferably a spirally wound electrofusion resistance wire forming a fusion coil. The fusion coil can be singly or doubly wound, although double winding is preferred. Examples of suitable saddle-shaped electrofusion elements and methods for their manufacture and use are described in US patents 4933037 and 5104468.

The body of the tapping tee assembly is preferably moulded integrally with the saddle and can be formed from the same or different plastics material. Both the saddle and the body of the tapping tee assembly can be formed from any suitable polymeric material and, for example, they can be formed from any of the fusible polymeric materials listed above. Preferably both the saddle and the body of the tapping tee assembly are formed from a polyolefin polymer, more preferably from polyethylene.

The body of the tapping tee assembly is preferably provided with a threaded bore cooperating with external threads on the cutter such that when the cutter is rotated it can travel along the bore. The cutter is preferably cylindrically shaped and formed from a metallic material. The cutter can be provided with saw teeth or other suitable means for cutting through the wall of the plastics pipeline.

The spigot is preferably integrally moulded with the body of the tapping tee and can, for example, extend at 90° to the axis of the bore. The spigot is in fluid communication with the bore and the arrangement is preferably such that the cutter does not completely block the opening of the spigot, in order that pressure testing can be carried out during installation of the tapping tee assembly, and in order that fluid is free to pass from the pipeline to the branch pipe in use.

The spigot can be provided with an integrally moulded tubular second electrofusion element or it can be adapted to receive a tubular second electrofusion element therein or thereon. For example, a separate tubular electrofusion element embedded in a fusible polymeric material can be a push fit on the spigot or can be received therein. Where a separate tubular electrofusion element is received in the spigot, a grab ring is preferably provided within the spigot in order to retain the electrofusion element in place. In certain embodiments of the invention the grab ring can also form a component of the circuit means. The tubular electrofusion element can if desired be wire ploughed into the spigot.

The tubular second electrofusion element is preferably a helically wound electrical resistance wire. The tubular second electrofusion element is preferably embedded in a body of fusible polymeric material, which can be selected from any of those enumerated above, in the manner of an electrofusion coupler. Where a tubular electrofusion coupler is used, this can, in a further embodiment, be butt-fused to the spigot.

In its simplest form, the circuit means can comprise an electrically conductive component incorporated into the body of the tapping tee and directly connecting the first and second electrofusion elements together. In another preferred embodiment the circuit means comprises one or more contacts that can make electrical connection to the metallic cutter so that an energising electric current can pass between the electrofusion elements. In this specification, by "integrated with the tapping tee assembly" is meant that the circuit means is a component of the tapping tee assembly and can, for example, be embedded, at least in part, in a wall of the tapping tee body. In preferred embodiments the circuit means is embedded, at least in part, in the internal wall of the bore of the tapping tee body.

In one embodiment, an electrical connector mounted on the spigot is connected to the second tubular electrofusion element of the spigot, which in turn is connected to a first contact disposed on the wall of the bore of the tapping tee body. This first contact is adapted to make an electrical connection to the metallic cutter when the metallic cutter is positioned in the bore adjacent to that contact. A second contact, also disposed on the wall of the bore, is connected to the first saddle-shaped electrofusion element (or mat) and is similarly adapted to make an electrical connection to the metallic cutter when the metallic cutter is positioned in the bore adjacent to that contact. The arrangement is such that when the metallic cutter is positioned in the bore adjacent the first and second contacts, an energising electric current can flow from the electrical connector mounted on the spigot through both electrofusion elements to a second electrical connector mounted on the saddle or body of the tapping tee.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### BRIEF DESCRIPTION OF THE DRAWINGS

Certain preferred embodiments of the invention are now described, by way of example only, with reference to the accompanying drawings in which:
Figure 1 shows a first embodiment of a tapping tee assembly according to the invention in sectional side elevation with the cutter at the top of the bore;
Figure 2 shows the tapping tee assembly of Figure 1, also in sectional side elevation, with the cutter disposed adjacent the first contact;
Figure 3 shows the tapping tee assembly of Figure 1, also in sectional side elevation with the cutter disposed adjacent the first and second contacts;
Figure 4 shows a second embodiment of a tapping tee assembly according to the invention in sectional side elevation, in which the fusion coils are permanently connected; and
Figure 5 shows a third embodiment of a tapping tee assembly according to the invention in sectional side elevation, in which a tubular electrofusion coupler is received in the spigot and retained by a grab ring.

### DETAILED DESCRIPTION

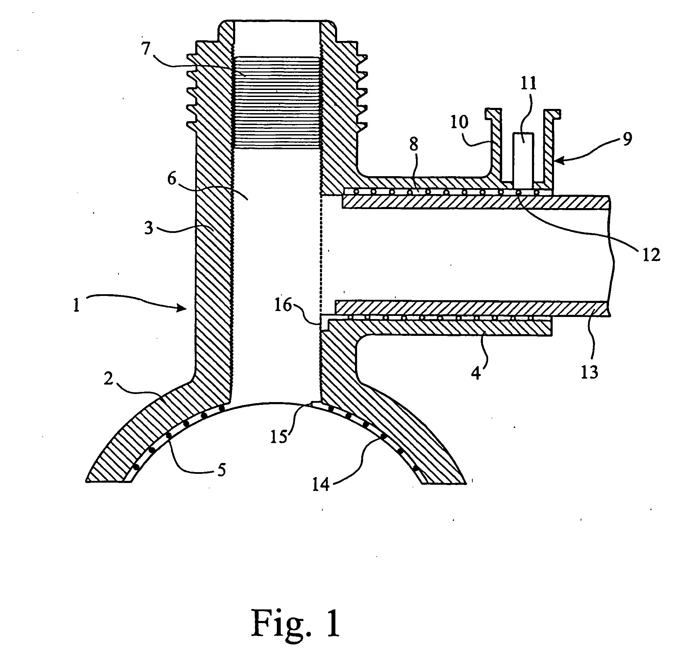

Referring firstly to Figure 1, the tapping tee assembly, illustrated generally at 1, comprises an integrally moulded saddle 2, body 3 and spigot 4. The saddle 2 is provided with a saddle-shaped electrofusion mat 5, which is attached thereto by over-moulding, snap-fit, screws or other fastening means (not shown). The body 3 has an axially extending screw threaded bore 6, and, disposed within the bore, a metal cutter 7 having a screw threaded outer surface that cooperates with the screw thread of the bore 6. The spigot 4 is provided with an internal tubular electrofusion coupler 8 and an electrical connector 9, comprising an upstanding boss 10 and an electrical pin 11. The electrical pin 11 is connected to the electrofusion element 12 of the tubular electrofusion coupler 8. A branch pipe 13 is shown in Figure 1 inserted in the spigot 4 ready for connection.

The electrofusion element 14 of the saddle-shaped electrofusion mat 5 is provided with a first electrical contact 15, which is disposed at the lower end of the axial bore 6. The tubular electrofusion element 12 of the tubular electrofusion coupler 8 is provided with a second electrical contact 16, which is disposed at the mouth of the spigot 4. Each of the electrical contacts 15 and 16 extends into the bore by a distance such that it makes wiping contact with the cutter 7 as it traverses the bore 6 but does not impede the passage thereof.

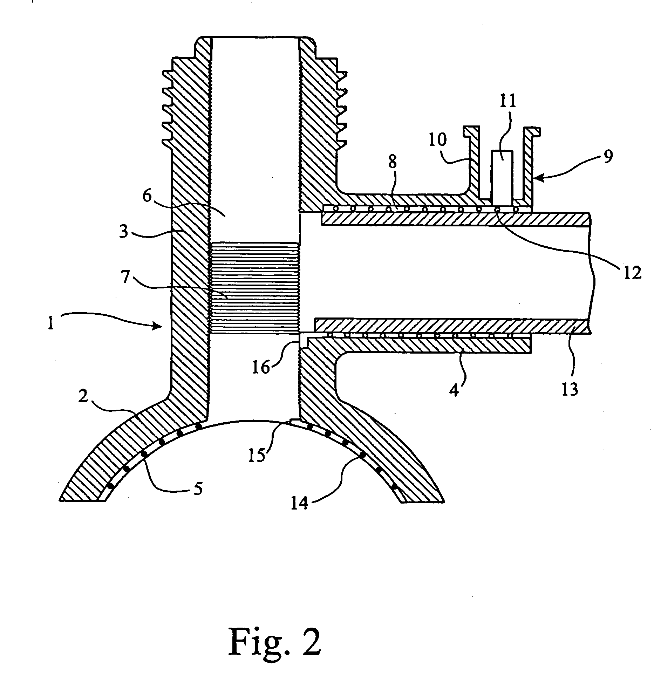

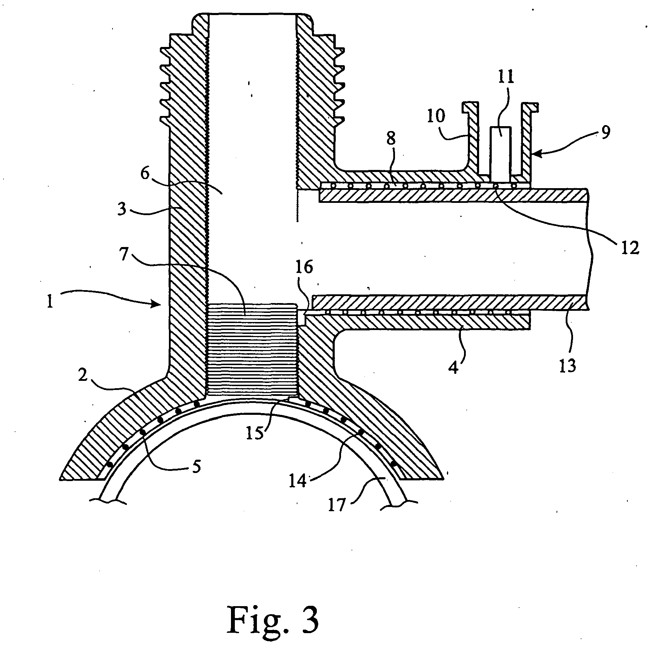

Referring now to Figure 2, the cutter 7 is first rotated, by means of a shaft inserted into the open end of the bore 6 (not shown), so that it traverses the bore until it makes wiping contact with the electrical contact 16, as shown. Further rotation of the cutter 7 brings it into wiping contact with both electrical contacts 15 and 16, as shown in Figure 3. In this position the tapping tee assembly is ready to be joined by electrofusion to the plastics pipeline 17 and to the branch pipe 13. A female connector (not shown) is inserted into the electrical connector 9 disposed on the spigot 4, and connected to a source of electric current. The electric current passes through the tubular electrofusion element 12 of the tubular electrofusion coupler 8, and thence via the electrical contacts 15 and 16, and the metal cutter 7, to the saddle-shaped electrofusion element 14 of the electrofusion mat 5. By energising the electrofusion elements 12 and 14 in this way, electrofusion joints can be made simultaneously between the spigot 4 and the branch pipe 13, and between the saddle 2 and the plastics pipeline 17. The resistances of the electrofusion elements 12 and 14 are balanced so that the heat outputs per unit area of the elements (in J/m²) are substantially identical (i.e. within about 10% of each other).

After the electrofusion joints have been allowed to cool, the cutter can be further rotated in order to cut a hole in the plastics pipeline 17. The cutter is then withdrawn, the system pressure tested, and a screw threaded cap (not shown) screwed on to the body of the tapping tee to complete the installation.

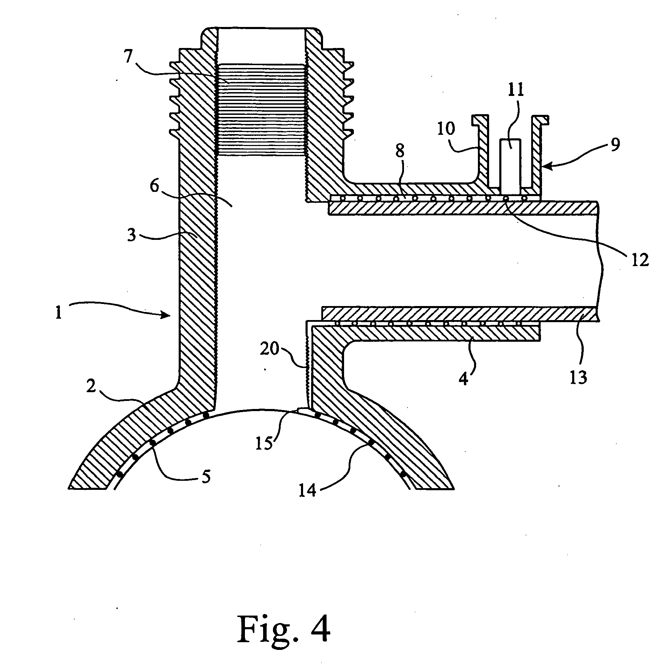

Referring now to Figure 4, there is shown an alternative circuit means wherein the electrofusion elements 12 and 14 are permanently and directly connected together. In this embodiment, the circuit means comprises a metallic strip 20 that is embedded in the internal wall of the bore 6. In this embodiment the connection between the electrofusion elements is maintained irrespective of the position of the cutter 7. In Figure 4, other numbered parts have the same significance as in Figure 1.

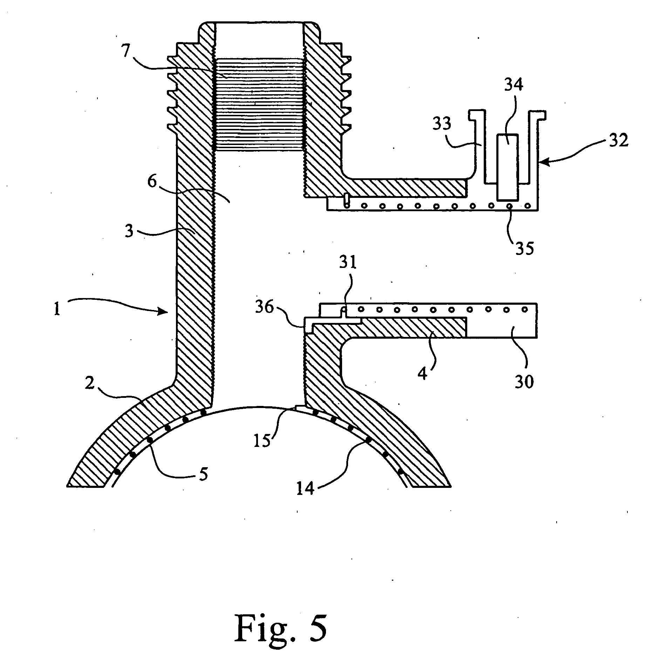

Figure 5 shows a still further embodiment in which a tubular electrofusion coupler 30 is received in the spigot 4 and retained by a grab ring 31. In this embodiment, the tubular electrofusion coupler 30 is a separate moulded component and also carries an electrical connector 32. The connector 32 comprises an upstanding boss 33 which surrounds an electrical pin 34, connected to the electrofusion element 35 of the electrofusion coupler 30. When the electrofusion coupler 30 is pushed into the spigot 4 it is retained by the grab ring 31 which is in turn connected to an electrical contact 36 disposed at the mouth of the spigot 4. The action of pushing the electrofusion coupler 30 into the spigot 4 forces the grab ring 31 over the electrofusion coupler such that its teeth penetrate the fusible polymeric material of the electrofusion coupler 30 and make an electrical connection with the electrofusion element 35. As with the embodiment of Figure 1, the tapping tee assembly is positioned on the pipeline, a branch pipe is inserted into the spigot, and the electrical circuit for energising the electrofusion elements is completed by rotating the cutter 7 until it makes an electrical connection between the contacts 15 and 36.

Whilst embodiments of the invention have been illustrated comprising electrical resistance wires as the electrofusion elements, it will be apparent that any other suitable electrofusion elements could also be used including grids, meshes, perforated sheets and other shapes. The electrofusion elements could also be energised by any suitable means including induction.

The reader's attention is directed to all papers and documents which are filed concurrently with or previous to this specification in connection with this application and which are open to public inspection with this specification.

All of the features disclosed in this specification (including any accompanying claims, abstract and drawings), and/or all of the combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiments. The invention extends to any novel one, or any novel combination, of the features disclosed in this specification (including any accompanying claims, abstract and drawings), or to any novel one, or any novel combination, of the steps of any method or process so disclosed, but is limited by the scope as defined by the appended claims.

## Claims

1. A tapping tee assembly (1) for a plastics pipeline (17) comprising:
a saddle (2), provided with a first saddle-shaped electrofusion element (5,14);
a hollow body (3) integral with the saddle and provided with an axial bore (6);
a cutter (7) disposed within the bore of the hollow body and adapted in use to traverse the bore, to make contact with the pipeline wall and to cut a hole therein;
a spigot (4) integral with the body and in fluid connection with the axial bore of the body; and
the spigot being provided with a tubular second electrofusion element (8,12) or being adapted to receive a tubular electrofusion element (30) therein or thereon;
**characterised in that**
separate circuit means (7,20) is provided for electrically connecting the first and second electrofusion elements (5,8/30), which circuit means is integrated with the tapping tee assembly.

2. A tapping tee assembly according to claim 1, wherein the cutter is formed from a metallic material and the circuit means (7) for electrically connecting the first and second electrofusion elements includes the cutter.

3. A tapping tee assembly according to claim 1, wherein the circuit means (20) for electrically connecting the first and second electrofusion elements comprises a direct connection, such that the electrofusion elements are permanently connected together.

4. A tapping tee assembly according to any one of the preceding claims, wherein electrical connectors (11,32) are mounted on the spigot and the body or saddle, whereby a source of electrical power can be connected to both the first and second electrofusion elements.

5. A tapping tee assembly according to any one of the preceding claims, wherein the first and second electrofusion elements are balanced such that when the circuit is energised the heat output per unit area per unit time from each of the first and second electrofusion elements is substantially identical.

6. A tapping tee according to claim 5, wherein the first and second electrofusion elements are balanced such that when the circuit is energised the time taken to complete the fusion bond for each of the first and second fusion elements is substantially identical

7. A tapping tee assembly according to any one of the preceding claims, wherein the saddle (2) is an annular disc or polygon, curved to conform to the outer wall of the plastics pipeline (17), and an electrofusion mat comprising the first electrofusion element is mounted on the saddle or clipped into a recess moulded into the saddle.

8. A tapping tee assembly according to any one of claims 1 to 6, wherein the first electrofusion element is integrated with the saddle by over-moulding the saddle, or embedded within the pre-moulded body of the saddle by "ploughing-in" an electrical resistance wire.

9. A tapping tee assembly according to claim 7, wherein the electrofusion mat (5) comprises a fusible polymeric material, preferably polyethylene, having an electrofusion element embedded therein.

10. A tapping tee assembly according to claim 9, wherein the electrofusion element is a spirally wound electrofusion resistance wire (14).

11. A tapping tee assembly according to any one of the preceding claims, wherein the body of the tapping tee assembly is moulded integrally with the saddle, preferably from polyethylene.

12. A tapping tee assembly according to any one of the preceding claims, wherein the body of the tapping tee assembly is provided with a threaded bore (6) cooperating with external threads on the cutter such that when the cutter is rotated it can travel along the bore.

13. A tapping tee assembly according to any one of the preceding claims, wherein the spigot (4) is integrally moulded with the body (3) of the tapping tee.

14. A tapping tee assembly according to any one of the preceding claims, wherein the spigot is provided with an integrally moulded tubular second electrofusion element (8).

15. A tapping tee assembly according to any one of claims 1 to 13, wherein the spigot is provided with a separate tubular second electrofusion element (30), the element being a push fit in or on the spigot.

16. A tapping tee assembly according to claim 15, wherein the separate tubular electrofusion element (30) is received in the spigot and a grab ring (31) is provided within the spigot in order to retain the electrofusion element in place.

17. A tapping tee assembly according to claim 16, wherein the grab ring (31) forms a component of the circuit means.

18. A tapping tee assembly according to any one of claims 1 to 13, wherein the spigot is provided with a separate tubular second electrofusion element, the element (12) having been wire ploughed into the spigot

19. A tapping tee assembly according to any one of the preceding claims, in which the second electrofusion element is a helically wound electrical resistance wire (12).

20. A tapping tee assembly according to any one of the preceding claims, in which the second electrofusion element is embedded in a body of fusible polymeric material.

21. A tapping tee assembly according to claim 15, wherein the second electrofusion element is an electrofusion coupler butt-fused to the spigot.

22. A tapping tee assembly according to claim 1 or claim 3, wherein the circuit means comprises an electrically conductive element (20) incorporated into the body of the tapping tee and directly connecting the first and second electrofusion elements together.

23. A tapping tee according to any one of claims 1 to 21, wherein the cutter is metallic and the circuit means comprises one or more contacts (16,15) that can make electrical connection to the metallic cutter (7) so that an energising electric current can pass between the first and second electrofusion elements.

24. A tapping tee according to any one of the preceding claims, wherein the circuit means (20;15,16) is embedded, at least in part, in the internal wall of the bore of the trapping tee body.

25. A tapping tee according to claim 2, wherein the electrical connector (11) mounted on the spigot (4) is electrically connected to the second tubular electrofusion element (8,12) which in turn is connected to a first electrical contact (16) disposed on the wall of the bore (6) of the tapping tee body and adapted to make an electrical connection to the metallic cutter (7) when the cutter is positioned in the bore adjacent the first electrical contact (16), and wherein a second electrical contact (15), also disposed on the wall of the bore (6) of the tapping tee body, is connected to the first electrofusion saddle-shaped element (5,14) and is adapted to make an electrical connection to the metallic cutter (7) when the cutter is positioned in the bore adjacent the second electrical contact, the arrangement being such that when the cutter is positioned in the bore adjacent the first and second electrical contacts (16,15), an energising electric current can flow from the electrical connector mounted on the spigot through both electrofusion elements (12,14).

## Patentansprüche

1. Anbohr-Abzweiganordnung (1) für eine Kunststoff-Pipeline (17) mit:
einem Sattel (2), der mit einem ersten sattelförmigen Elektrofusionselement (5, 14) versehen ist;
einem Hohlkörper (3), der mit dem Sattel integriert und mit einer Axialbohrung (6) versehen ist;
einer Schneideinrichtung (7), die in der Bohrung des Hohlkörpers angeordnet und ausgestaltet ist, um die Bohrung bei Benutzung zu durchkreuzen, um einen Kontakt mit der Wand der Pipeline herzustellen und um in diese ein Loch zu schneiden;
einem Zapfhahn (4), der mit dem Körper integriert ist und mit der Axialbohrung des Körpers in Fluidverbindung steht; und
wobei der Zapfhahn mit einem rohrförmigen zweiten Elektrofusionselement (8,12) versehen oder ausgestaltet ist, um ein rohrförmiges Elektrofusionselement (30) darin oder daran aufzunehmen;
**dadurch gekennzeichnet, dass**
eine separate Schaltkreiseinrichtung (7,20) vorgesehen ist, um das erste und das zweite Elektrofusionselement (5,8/30) elektrisch zu verbinden, wobei die Schaltkreiseinrichtung mit der Anbohr-Abzweiganordnung integriert ist.

2. Anbohr-Abzweiganordnung nach Anspruch 1, bei der die Schneideinrichtung aus einem metallischen Material hergestellt ist und die Schaltkreiseinrichtung (7) zum elektrischen Verbinden des ersten und des zweiten Elektrofusionselements die Schneideinrichtung beinhaltet.

3. Anbohr-Abzweiganordnung nach Anspruch 1, bei der die Schaltkreiseinrichtung (20) zum elektrischen Verbinden des ersten und des zweiten Elektrofusionselements eine direkte Verbindung beinhaltet, so dass die Elektrofusionselemente permanent miteinander verbunden sind.

4. Anbohr-Abzweiganordnung nach einem der vorhergehenden Ansprüche, bei der die elektrischen Verbindungen (11, 32) an dem Zapfhahn und dem Körper oder dem Sattel angebracht sind, wodurch eine elektrische Energiequelle sowohl mit dem ersten als auch dem zweiten Elektrofusionselement verbunden werden kann.

5. Anbohr-Abzweiganordnung nach einem der vorhergehenden Ansprüche, bei der das erste und das zweite Elektrofusionselement ausgeglichen sind, so dass dann, wenn dem Schaltkreis Energie zugeführt wird, die Wärmeabgabe pro Flächeneinheit pro Zeiteinheit für jedes von dem ersten und dem zweiten Elektrofusionselement im Wesentlichen gleich ist.

6. Anbohr-Abzweiganordnung nach Anspruch 5, bei der das erste und das zweite Elektrofusionselement ausgeglichen sind, so dass dann, wenn dem Schaltkreis Energie zugeführt wird, die Zeit, die benötigt wird, um die Fusionsverbindung für jedes von dem ersten und dem zweiten Elektrofusionselement vollständig durchzuführen, im Wesentlichen gleich ist.

7. Anbohr-Abzweiganordnung nach einem der vorhergehenden Ansprüche, bei der der Sattel (2) eine ringförmige Scheibe oder Polygon ist, die gekrümmt ist, um an die Außenwand der Kunststoff-Pipeline (17) angepasst zu sein, und bei dem eine Elektrofusionsmatte, die das erste Elektrofusionselement beinhaltet, an dem Sattel angebracht oder in einer in dem Sattel ausgebildeten Aussparung eingeklemmt ist.

8. Anbohr-Abzweiganordnung nach einem der Ansprüche 1 bis 6, bei der das erste Elektrofusionselement durch Überformen des Sattels mit dem Sattel integriert ist oder in dem vorgeformten Körper des Sattels durch "Einpressen" eines elektrischen Widerstandsdrahtes eingebettet ist.

9. Anbohr-Abzweiganordnung nach Anspruch 7, bei der die Elektrofusionsmatte (5) ein schmelzbares Polymermaterial beinhaltet, vorzugsweise Polyethylen, in dem ein Elektrofusionselement eingebettet ist.

10. Anbohr-Abzweiganordnung nach Anspruch 9, bei der das Elektrofusionselement ein spiralförmig gewickelter Elektrofusionswiderstandsdraht (14).

11. Anbohr-Abzweiganordnung nach einem der vorhergehenden Ansprüche, bei der der Körper der Anbohr-Abzweiganordnung integriert mit dem Sattel geformt ist, vorzugsweise aus Polyethylen.

12. Anbohr-Abzweiganordnung nach einem der vorhergehenden Ansprüche, bei der der Körper der Anbohr-Abzweiganordnung mit einer Gewindebohrung (6) versehen ist, die mit Außengewinde der Schneideinrichtung zusammenwirkt, so dass dann, wenn die Schneideinrichtung gedreht wird, diese entlang der Bohrung verlagert werden kann.

13. Anbohr-Abzweiganordnung nach einem der vorhergehenden Ansprüche, bei der der Zapfhahn (4) integriert mit dem Körper (3) der Anbohr-Abzweiganordnung ausgebildet ist.

14. Anbohr-Abzweiganordnung nach einem der vorhergehenden Ansprüche, bei der der Zapfhahn mit einem integriert ausgebildeten, rohrförmigen zweiten Elektrofusionselement (8) versehen ist.

15. Anbohr-Abzweiganordnung nach einem der Ansprüche 1 bis 13, bei der der Zapfhahn mit einem separaten rohrförmigen zweiten Elektrofusionselement (30) versehen ist, wobei das Element in oder auf den Zapfhahn gepresst wird.

16. Anbohr-Abzweiganordnung nach Anspruch 15, bei der das separate rohrförmige Elektrofusionselement (30) in dem Zapfhahn aufgenommen ist und ein Haltering (31) in dem Zapfhahn vorgesehen ist, um das Elektrofusionselement in seiner Position zu halten.

17. Anbohr-Abzweiganordnung nach Anspruch 16, bei der der Haltering (31) eine Komponente der Schaltkreiseinrichtung bildet.

18. Anbohr-Abzweiganordnung nach einem der Ansprüche 1 bis 13, bei der der Zapfhahn mit einem separaten rohrförmigen zweiten Elektrofusionselement versehen ist, wobei das Element (12) in Form eines Drahtes in den Zapfhahn eingepresst ist.

19. Anbohr-Abzweiganordnung nach einem der vorhergehenden Ansprüche, bei der das zweite Elektrofusionselement ein schraubenförmig gewickelter elektrischer Widerstandsdraht (12) ist.

20. Anbohr-Abzweiganordnung nach einem der vorhergehenden Ansprüche, bei der das zweite Elektrofusionselement in einem Körper aus einem schmelzbaren Polymermaterial eingebettet ist.

21. Anbohr-Abzweiganordnung nach Anspruch 15, bei der das zweite Elektrofusionselement eine Elektrofusions-Kopplungseinrichtung ist, die flächig mit dem Zapfhahn verschmolzen ist.

22. Anbohr-Abzweiganordnung nach Anspruch 1 oder Anspruch 3, bei der die Schaltkreiseinrichtung ein elektrisch leitfähiges Element (20) aufweist, das in dem Körper der Anbohr-Abzweiganordnung integriert ist und direkt das erste und das zweite Elektrofusionselement miteinander verbindet.

23. Anbohr-Abzweiganordnung nach einem der Ansprüche 1 bis 21, bei der die Schneideinrichtung aus Metal besteht und die Schaltkreiseinrichtung ein oder mehrere Kontakte (16,15) hat, mittels derer eine elektrische Verbindung mit der metallischen Schneideinrichtung (7) hergestellt werden kann, so dass ein elektrischer Speisestrom zwischen dem ersten und dem zweiten Elektrofusionselement fließen kann.

24. Anbohr-Abzweiganordnung nach einem der vorhergehenden Ansprüche, bei der die Schaltkreiseinrichtung (20;15,16) zumindest teilweise in der inneren Wand der Bohrung des Körpers der Anbohr-Abzweiganordnung eingebettet ist.

25. Anbohr-Abzweiganordnung nach Anspruch 2, bei der die elektrische Verbindung (11), die an dem Zapfhahn angebracht ist, elektrisch mit dem zweiten rohrförmigen Elektrofusionselement (8,12) verbunden ist, das wiederum mit einem ersten elektrischen Kontakt (16) verbunden ist, der an der Wand der Bohrung (6) des Körpers der Anbohr-Abzweiganordnung angeordnet und ausgestaltet ist, um eine elektrische Verbindung mit der metallischen Schneideinrichtung (7) herzustellen, wenn die Schneideinrichtung in der Bohrung benachbart zu dem ersten elektrischen Kontakt (16) angeordnet ist, und bei der ein zweiter elektrischer Kontakt (15), der ebenfalls an der Wand der Bohrung (6) des Körpers der Anbohr-Abzweiganordnung angeordnet ist, mit dem ersten sattelförmigen Elektrofusionselement (5,14) verbunden und ausgestaltet ist, um eine elektrische Verbindung mit der metallischen Schneideinrichtung (7) herzustellen, wenn sich die Schneideinrichtung in der Bohrung benachbart zu dem zweiten elektrischen Kontakt befindet, und wobei die Anordnung so ist, dass dann, wenn sich die Schneideinrichtung in der Bohrung benachbart zu dem ersten und dem zweiten elektrischen Kontakt (16,15) befindet, ein elektrischer Speisestrom von der elektrischen Verbindung, die an dem Zapfhahn angebracht ist, durch beide Elektrofusionselemente (12,14) fließen kann.

## Revendications

1. Ensemble de raccord en T de piquage (1) pour une canalisation en matière plastique (17) comprenant :
- une selle (2) dotée d'un premier élément d'électrofusion (5, 14) en forme de selle ;
- un corps creux (3) d'un seul tenant avec la selle et doté d'un alésage axial (6) ;
- un organe de découpe (7) disposé à l'intérieur de l'alésage du corps creux et apte, en utilisation, à traverser l'alésage, pour faire contact avec la paroi de la canalisation et découper un trou dans celle-ci ;
- un embout mâle (4) d'un seul tenant avec le corps et en connexion de fluide avec l'alésage axial du corps ; et
- l'embout mâle étant doté d'un second élément d'électrofusion tubulaire (8, 12) ou étant apte à recevoir un élément d'électrofusion tubulaire (30) dans celui-ci ou sur celui-ci ;
**caractérisé par le fait que** :
- un moyen de circuit séparé (7, 20) est disposé en vue d'une connexion électrique des premier et second éléments d'électrofusion (5, 8/30), lequel moyen de circuit est intégré avec l'ensemble de raccord en T de piquage.

2. Ensemble de raccord en T de piquage selon la revendication 1, dans lequel l'organe de découpe est formé d'une matière métallique et le moyen de circuit (7) en vue d'une connexion électrique des premier et second éléments d'électrofusion comprend l'organe de découpe.

3. Ensemble de raccord en T de piquage selon la revendication 1, dans lequel le moyen de circuit (20) en vue d'une connexion électrique des premier et second éléments d'électrofusion comprend une connexion directe, de telle sorte que les éléments d'électrofusion sont connectés ensemble de façon permanente.

4. Ensemble de raccord en T de piquage selon l'une quelconque des revendications précédentes, dans lequel des connecteurs électriques (11, 32) sont montés sur l'embout mâle et le corps ou la selle, ce par quoi une source de courant électrique peut être connectée à la fois aux premier et second éléments d'électrofusion.

5. Ensemble de raccord en T de piquage selon l'une quelconque des revendications précédentes, dans lequel les premier et second éléments d'électrofusion sont équilibrés de telle sorte que, lorsque le circuit est excité, la production de chaleur par unité de surface par unité de temps par chacun des premier et second éléments d'électrofusion est sensiblement identique.

6. Raccord en T selon la revendication 5, dans lequel les premier et second éléments d'électrofusion sont équilibrés de telle sorte que, lorsque le circuit est excité, le temps mis pour achever la liaison par fusion pour chacun des premier et second éléments de fusion est sensiblement identique.

7. Ensemble de raccord en T de piquage selon l'une quelconque des revendications précédentes, dans lequel la selle (2) est un disque ou polygone annulaire, cintrée pour se conformer à la paroi externe de la canalisation en matière plastique (17), et un mat d'électrofusion comprenant le premier élément d'électrofusion est monté sur la selle ou fixé dans une cavité moulée dans la selle.

8. Ensemble de raccord en T de piquage selon l'une quelconque des revendications 1 à 6, dans lequel le premier élément d'électrofusion est intégré à la selle par surmoulage de la selle, ou noyé à l'intérieur du corps pré-moulé de la selle par « enfouissement » d'un fil de résistance électrique.

9. Ensemble de raccord en T de piquage selon la revendication 7, dans lequel le mat d'électrofusion (5) comprend une matière polymère fusible, de préférence le polyéthylène, ayant un élément d'électrofusion noyé dans celle-ci.

10. Ensemble de raccord en T de piquage selon la revendication 9, dans lequel l'élément d'électrofusion est un fil de résistance d'électrofusion (14) enroulé en spirale.

11. Ensemble de raccord en T de piquage selon l'une quelconque des revendications précédentes, dans lequel le corps de l'ensemble de raccord en T de piquage est moulé d'un seul tenant avec la selle, de préférence en polyéthylène.

12. Ensemble de raccord en T de piquage selon l'une quelconque des revendications précédentes, dans lequel le corps de l'ensemble de raccord en T de piquage est doté d'un alésage taraudé (6) coopérant avec un filetage externe sur l'organe de découpe de telle sorte que, lorsque l'organe de découpe est entraîné en rotation, il peut se déplacer le long de l'alésage.

13. Ensemble de raccord en T de piquage selon l'une quelconque des revendications précédentes, dans lequel l'embout mâle (4) est moulé d'un seul tenant avec le corps (3) du raccord en T de piquage.

14. Ensemble de raccord en T de piquage selon l'une quelconque des revendications précédentes, dans lequel l'embout mâle est doté d'un second élément d'électrofusion (8), tubulaire, moulé d'un seul tenant.

15. Ensemble de raccord en T de piquage selon l'une quelconque des revendications 1 à 13, dans lequel l'embout mâle est doté d'un second élément d'électrofusion tubulaire, séparé (30), l'élément étant un élément à ajustement légèrement dur dans ou sur l'embout mâle.

16. Ensemble de raccord en T de piquage selon la revendication 15, dans lequel l'élément d'électrofusion tubulaire, séparé (30) est reçu dans l'embout mâle et un anneau de prise (31) est disposé à l'intérieur de l'embout mâle de façon à retenir l'élément d'électrofusion en place.

17. Ensemble de raccord en T de piquage selon la revendication 16, dans lequel l'anneau de prise (31) forme un composant du moyen de circuit.

18. Ensemble de raccord en T de piquage selon l'une quelconque des revendications 1 à 13, dans lequel l'embout mâle est doté d'un second élément d'électrofusion tubulaire séparé, l'élément (12) ayant été disposé par enfouissement de fil dans l'embout mâle.

19. Ensemble de raccord en T de piquage selon l'une quelconque des revendications précédentes, dans lequel le second élément d'électrofusion est un fil de résistance électrique (12) enroulé de façon hélicoïdale.

20. Ensemble de raccord en T de piquage selon l'une quelconque des revendications précédentes, dans lequel le second élément d'électrofusion est noyé dans un corps polymère fusible.

21. Ensemble de raccord en T de piquage selon la revendication 15, dans lequel le second élément d'électrofusion est un coupleur d'électrofusion fusionné bout-à-bout à l'embout mâle.

22. Ensemble de raccord en T de piquage selon la revendication 1 ou la revendication 3, dans lequel le moyen de circuit comprend un élément (20) conducteur de l'électricité incorporé dans le corps du raccord en T de piquage et connectant ensemble directement les premier et second éléments d'électrofusion.

23. Raccord en T de piquage selon l'une quelconque des revendications 1 à 21, dans lequel l'organe de découpe est métallique et le moyen de circuit comprend un ou plusieurs contacts (16, 15) qui peuvent faire une connexion électrique avec l'organe de découpe métallique (7), de telle sorte qu'un courant électrique d'excitation peut passer entre les premier et second éléments d'électrofusion.

24. Raccord en T de piquage selon l'une quelconque des revendications précédentes, dans lequel le moyen de circuit (20 ; 15, 16) est noyé, au moins en partie, dans la paroi interne de l'alésage du corps du raccord en T de piquage.

25. Raccord en T de piquage selon la revendication 2, dans lequel le connecteur électrique (11), monté sur l'embout mâle (4), est connecté électriquement au second élément d'électrofusion tubulaire (8, 12) lequel, à son tour, est connecté à un premier contact électrique (16) disposé sur la paroi de l'alésage (6) du corps de raccord en T de piquage et apte à faire une connexion électrique avec l'organe de découpe métallique (7) lorsque l'organe de découpe est positionné dans l'alésage adjacent au premier contact électrique (16), et dans lequel un second contact électrique (15), également disposé sur la paroi de l'alésage (6) du corps de raccord en T de piquage, est connecté au premier élément d'électrofusion en forme de selle (5, 14) et est apte à faire une connexion électrique avec l'organe de découpe métallique (7) lorsque l'organe de découpe est positionné dans l'alésage adjacent au second contact électrique, le dispositif étant tel que, lorsque l'organe de découpe est positionné dans l'alésage adjacent aux premier et second contacts électriques (16, 15), un courant électrique d'excitation peut passer du connecteur électrique monté sur l'embout mâle à travers les deux éléments d'électrofusion (12, 14).
